# EUROPÄISCHE PATENTSCHRIFT

(11) **EP 2 810 983 B1**
(45) Veröffentlichungstag und Bekanntmachung des Hinweises auf die Patenterteilung: **09.03.2016**
(21) Anmeldenummer: 13170801.8
(22) Anmeldetag: 06.06.2013
(51) Int. Cl.: C08K 5/5313, C08L 77/00, C08K 7/14, C08J 5/08, C08J 5/04

(54) **Glasfaserverstärkte flammgeschützte Polyamidformmassen**
Glass fiber reinforced flame retardant polyamide moulding materials
Masses à mouler en polyamide ignifugées renforcées par des fibres de verre

(43) Veröffentlichungstag der Anmeldung: 10.12.2014
(73) Patentinhaber: EMS-PATENT AG, 7013 Domat / Ems (CH)
(72) Erfinder: Roth, Mark D., 57339 Erndtebrück (DE); Lamberts, Nikolai, 7402 Bonaduz (CH); Dübon, Pierre, 8006 Zürich (CH); Tuor, Gion Antoni, 7403 Rhäzüns (CH)
(74) Vertreter: Bremi, Tobias Hans

(56) Entgegenhaltungen:
- EP-A1- 1 624 015
- EP-A1- 2 060 596
- EP-A1- 2 100 919
- US-A1- 2009 156 716

## Beschreibung

### TECHNISCHES GEBIET

Die vorliegende Erfindung betrifft flammgeschützte Polyamidformmassen, sowie Verfahren zu deren Herstellung und ihre Verwendung.

### STAND DER TECHNIK

An Kunststoffe werden für einige Verwendungen hohe Anforderungen bezüglich ihrer flammhemmenden Eigenschaften gestellt. Besonders für den Einsatz in elektronischen Geräten ist die flammhemmende Ausrüstung der Kunststoffe wegen der Gefahr von Kurzschlüssen unabdingbar.

Neben Kunststoffen, die per se flammwidrig sind (= inhärenter Flammschutz) und mit einem Flammschutzmittel beschichteten Kunststoffen finden auch Kunststoffe mit einem reaktiven Flammschutzmittel Verwendung, d.h. das Flammschutzmittel ist Bestandteil des Kunststoffs und wurde an diesen während der Polymerisation chemisch gebunden. Eine weitere Variante zur flammhemmenden Ausstattung von Kunststoffen ist das Eincompoundieren von flammhemmenden Additiven. Gängige Additive sind z.B. stickstoffbasierte Verbindungen wie Melamin und Harnstoff, bromierte Polystyrole und Organophosphorverbindungen.

Eine weitere essentielle Anforderung an Kunststoffe sind gute mechanische Eigenschaften, die unter anderem durch Glasfaserverstärkung erhalten werden können. Auf dem Gebiet der Polyamide finden sich im Stand der Technik einige Beispiele für glasfaserverstärkte, flammhemmend ausgerüstete Formmassen. Das Erreichen der Brandschutzklasse UL 94 V-0 stellt für glasfaserverstärkte Polyamidformmassen eine besondere Herausforderung dar. Der Stand der Technik beschreibt einige glasfaserverstärkte flammhemmend ausgerüstete Polyamidformmassen.

Zudem ist wichtig, dass die Polyamide gut verarbeitet werden können z.B. in Spritzgussmaschinen und ohne dass Korrosionsprobleme o.ä. auftreten.

Die EP 2 100 919 A1 betrifft flammhemmende Polyamidharzzusammensetzungen umfassend ein Polyamidharz, ein Phosphor-enthaltendes Flammschutzmittel und Glasfasern mit einem nicht-kreisförmigen Querschnitt. Gemäss der Lehre dieser Schrift werden durch den Einsatz von Glasfasern mit nicht kreisförmigem Querschnitt, den sogenannten flachen Glasfasern, bessere flammhemmende Eigenschaften erhalten als beim Einsatz von Glasfasern mit kreisförmigem Querschnitt.

Ausserdem sind aus der WO 00/73375 A2 flammhemmend ausgerüstete Polyamidharzzusammensetzungen bekannt, die zum einen entweder eine organische Phosphorverbindung, Melamin oder eine von Melamin abgeleitete Verbindung oder eine Melamin-Phosphorverbindung umfassen. Zum anderen umfassen die Zusammensetzungen eine spezielle Polymerverbindung, die olefinische Bestandteile und Epoxy-, Säure- oder Säureanhydridgruppen enthält.

Die DE 36 09 341 A1 beschreibt flammfest ausgerüstete, verstärkte Polyamidformmassen, die Melamin oder Melamincyanurat und ungeschlichtete Glasfasern enthalten.

### DARSTELLUNG DER ERFINDUNG

Es ist unter anderem Aufgabe der vorliegenden Erfindung, flammhemmend ausgerüstete Polyamidformmassen mit sehr guten mechanischen Eigenschaften bereitzustellen. Diese Aufgabe wird durch eine Formmasse der folgenden Zusammensetzung gelöst.
(A) 25 bis 90 Gew.-% mindestens eines Polyamids,
(B) 5 bis 60 Gew.-% an Glasfasern mit einer, in der Polyamidformmasse vorliegenden mittleren Länge von 100 bis 220 µm,
(C) 5 bis 25 Gew.-% mindestens eines Phosphinsäuresalzes und/oder eines Diphosphinsäuresalzes,
(D) 0 bis 20 Gew.-% mindestens eines Additivs und/oder Zusatzstoffs,
wobei sich die Komponenten (A) bis (D) auf 100 Gew.-% ergänzen.

Die erfindungsgemässen Formmassen zeichnen sich überraschenderweise durch verbesserte flammhemmende Eigenschaften gegenüber Formmassen mit Glasfasern einer mittleren Länge oberhalb von 220 µm aus. Dank des Erreichens der Klassifizierung V-0 gemäss der UL 94 können Formkörper aus den erfindungsgemässen Formmassen für spezielle Anwendungen in der Elektro- und Elektronikindustrie verwendet werden.

Die im Vergleich zu Formmassen mit größeren Glasfaserlängen isotropere Verarbeitungsschwindung der erfindungsgemäßen Formmassen und die damit verbundene geringere Verzugsneigung erlauben die Herstellung großflächiger Bauteile wie zum Beispiel Gehäuserückwände von Schaltschränken und ähnlichem oder aufwendig gestalteter Bauteile mit anspruchsvoller Geometrie, deren Formabbildung durch stark anisotrope Schwindung in Mitleidenschaft gezogen wird.

Wird bei Glasfasern im Rahmen der vorliegenden Erfindung von einer "mittleren Länge" gesprochen, so ist darunter die mittlere Länge (arithmetisches Mittel) zu verstehen, welche gemäss Kapitel der ISO 22314:2006(E) mit den in der Beschreibung genannten Abweichungen von der Norm bestimmt wurde. Das arithmetische Mittel der Länge der Glasfasern in der Formmasse wird also nach der in der detaillierten Beschreibung angegebenen Verfahrensweise ausgehend von einer Probe der Polyamid-Formmasse bestimmt. Es handelt sich dabei um die mittlere Länge der Glasfasern, wie sie in der Polyamid-Formmasse vorliegen, nicht notwendigerweise um die mittlere Länge des Glasfaser-Ausgangsmaterials. Es ist nämlich einer der wesentlichen weiteren Aspekte der vorliegenden Erfindung, dass eine solche Formmasse auch ausgehend von ursprünglich längeren Glasfasern hergestellt werden kann, der Verarbeitungsprozess, insbesondere der Extrusionsprozess, aber so eingestellt wird, dass die mittlere Faserlänge in der resultierenden Polyamid-Formmasse respektive in einem daraus hergestellten Polyamid-Formteil im beanspruchten Bereich von 100-220 µm zu liegen kommt.

Die Faserlänge wird dabei im Wesentlichen nach der internationalen Norm ISO 22314:2006 bestimmt. Da in Anwesenheit von Flammschutzmitteln die in dieser Norm vorgegebene Veraschung (vergleiche 6.1, dort Veraschung nach ISO 1172 während 1.5 Stunden) aber nicht immer zu freigelegten Glasfasern führt, die mit dem Mikroskop gemäß 6.3 der Norm effektiv ausgemessen werden können, musste eine etwas modifizierte Vorgehensweise gewählt werden. So werden vorliegend unter Verwendung eines geeigneten Lösungsmittels die anderen Bestandteile als die Glasfasern, nämlich die Komponenten (A), (C) und (D) aus der Polyamid-Formmasse, wie oben definiert, herausgelöst. Die Bestimmung der mittleren Länge der in der Polyamid-Formmasse vorliegenden Glasfasern erfolgt also nach ISO 22314:2006 mit dem Unterschied, dass anstelle der dort vorgegebenen Veraschung zur Freilegung der Glasfasern ein geeignetes Lösungsmittel eingesetzt wird (vergleiche detaillierte Beschreibung im Rahmen der Beispiele).

Ausserdem weisen die erfindungsgemässen Formmassen eine bessere Reissdehnung auf als vergleichbare Formmassen mit Glasfasern einer üblichen mittleren Länge.

Ein weiterer Vorteil der erfindungsgemässen Formmassen besteht in ihrer verbesserten Glühdrahtbeständigkeit.

Vorzugsweise ist das Polyamid (A) ausgewählt aus der folgenden Gruppe bestehend aus: PA 6; PA 46; PA 66; PA 66/6; PA 610; PA 612; PA 1010; PA 11; PA 12; PA MXD6 (MXD = meta-Xylylendiamin); PA MXD10; PA MACM 12; PA PACM 12; PA 6T/6I; PA 6T/66; PA 6T/612; PA 6T/1012; PA 4T; PA 9T; PA 10T; PA 12T; PA 10/6T; PA 6T/6I/66; PA 11/10T; PA 12/10T; PA 610/10T; PA 612/10T; PA 1010/10T; PA 1012/10T; PA 1212/10T; PA 11/10T/12; PA 11/10T/6; PA 12/10T/6; PA 11/10T/10I; PA 11/10T/106; PA 12/10T/10I; PA 12/10T/106; PA MPMDT (PA MPMDT = Polyamid auf Basis einer Mischung aus Hexamethylendiamin und 2-Methyl Pentamethylendiamin als Diaminkomponente und Terephthalsäure als Disäurekomponente); Polyamide deren Diaminbaustein PACM (PACM = 4,4'-Diaminocyclohexylmethan, MACM (MACM = 3,3'-Dimethyl-4,4'-diaminocyclohexylmethan), CHDA (CHDA = Cyclohexyldiamin), oder TMDC (TMDC = 2,2',6,6'-Tetramethyl-4,4'-methylenbis(cyclohexylamin) ist; und deren Mischungen. Besonders bevorzugt sind aliphatische Polyamide, insbesondere bevorzugt ist das Polyamid (A) PA 6 oder PA 66 und am bevorzugtesten eine Legierung aus PA 66 und PA 6.

Das Polyamid (A) ist in 25 bis 90 Gewichtsprozent, bevorzugt in 35 bis 80 Gewichtsprozent und insbesondere bevorzugt in 45 bis 75 Gewichtsprozent in der erfindungsgemässen Zusammensetzung enthalten.

In einer weiteren bevorzugt Ausführungsform enthält die Zusammensetzung 35 bis 60 Gewichtsprozent PA 66 und 5 bis 15 Gewichtsprozent PA 6, wobei die Angaben jeweils bezogen sind auf die Gesamtmasse, d.h. auf die Summe der Komponenten (A)-(D).

Die eingesetzten Polyamide (A) weisen bevorzugt eine relative Viskosität bestimmt nach ISO 307 (0,5 g Polyamid in 100 ml Ameisensäure bei 25 °C) von 1,80 bis 2,30, bevorzugt von 1,85 bis 2,25 und besonders bevorzugt von 2,05 bis 2,20 auf.

Gemäss einer weiteren Ausführungsform der vorgeschlagenen Polyamid-Formmasse handelt es sich bei den Glasfasern (B) um Fasern mit einer mittleren Länge im Bereich von 100 bis 220 µm, bevorzugt von 120 bis 200 µm und insbesondere bevorzugt von 135 bis 190 µm. Unter der Länge der Glasfaser (B) wird dabei die mittlere Länge verstanden, die wie im experimentellen Teil beschrieben bestimmt wird. Werden Glasfasern mit einer Länge unter 100 µm eingesetzt, nehmen die mechanischen Eigenschaften zu stark ab, Glasfasern mit einer Länge von über 220 µm führen zu verschlechterten flammhemmenden Eigenschaften.

Es können dabei Glasfasern (B) eingesetzt werden, die vorab gemahlen wurden, um sie auf die oben genannte Länge einzustellen. Weiterhin ist es möglich, die Länge im Schritt der Compoundierung einzustellen, indem handelsübliche Stapelfasern über den Einzug des Extruders zudosiert und durch die Scherung auf der gesamten Verfahrenslänge des Extruders gekürzt werden. Außerdem können die Glasfasern (B) mit der Komponente A im Verhältnis 1:1 auf einem Extruder compoundiert werden. Anschließend wird das so erhaltene Glasfaser-Konzentrat (Masterbatch) mit den zum Erreichen des vorgesehenen Mischungsverhältnisses nötigen Mengen der Komponenten A, C und D auf dem Extruder gemischt. Bevorzugt ist es, die Glasfaser über den Einzug des Extruders zu dosieren.

Der mittlere Durchmesser der Glasfasern (B) beträgt von 7 bis 15 µm, wobei insbesondere Fasern mit kreisförmiger und/oder nicht-kreisförmiger Querschnittsfläche eingesetzt werden, wobei bei flachen Glasfasern das Abmessungsverhältnis von der Hauptquerschnittsachse zur Nebenquerschnittsachse insbesondere > 2:1 ist, bevorzugt im Bereich von 2:1 bis 5:1 und besonders bevorzugt im Bereich von 3:1 bis 4,5:1 liegt. In einer bevorzugten Ausführungsform weisen die eingesetzten Glasfasern ausschliesslich einen runden Querschnitt auf.

Zur Verstärkung der erfindungsgemäßen Formmassen können auch Mischungen von Glasfasern (B) mit kreisförmigem und nicht-kreisförmigem Querschnitt verwendet werden, wobei der Anteil an Glasfasern mit rundem Querschnitt wie oben definiert bevorzugt überwiegt, d.h. mehr als 50 Gew.-% der Gesamtmasse der Fasern ausmacht.

Die Glasfaser (B) selbst, unabhängig von der Form der Querschnittsfläche und Länge der Faser, kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern, R-Glasfasern und S-Glasfasern bevorzugt sind.

Die Glasfasern (B) sind bevorzugt mit einer Schlichte, bestehend aus Polyurethan als Filmbildner und Aminosilan als Haftvermittler, versehen.

Komponente (B) ist bevorzugt in 5 bis 55 Gewichtsprozent, besonders bevorzugt in 10 bis 50 Gewichtsprozent und insbesondere bevorzugt in 15 bis 40 Gewichtsprozent in der erfindungsgemässen Zusammensetzung enthalten.

Als Komponente (C) werden bevorzugtermassen Phosphinsäuresalze der allgemeinen Formel (I) und/oder Formel (II) und/oder deren Polymere verwendet, wobei R1, R2 gleich oder verschieden sein können und C1-C8-Alkyl, linear oder verzweigt und/oder Aryl sein können. R3 kann C1-C10-Alkylen, linear oder verzweigt, C6-C10-Arylen, -Alkylarylen oder -Arylalkylen sein. M ist ein Metallion aus der 2. oder 3. Haupt- oder Nebengruppe des Periodensystems, wobei bevorzugt Al, Ba, Ca und Zn verwendet werden. Für m ist 2 oder 3, für n 1 oder 3 und für x 1 oder 2 bevorzugt.

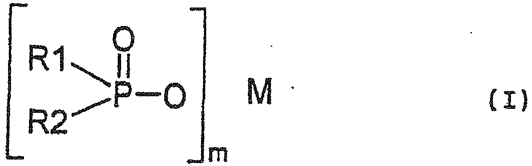

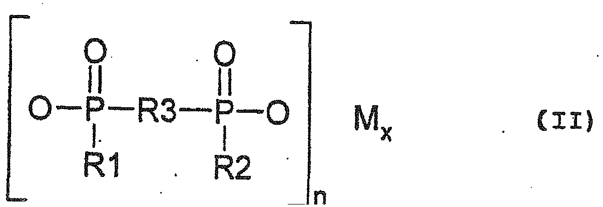

Besonders bevorzugt als Komponente (C) ist das von der Firma Clariant kommerzialisierte Flammschutzmittel Exolit OP 1230, bei welchem es sich um das Aluminiumsalz der Diethylphosphinsäure (CAS-Nr. 225789-38-8) handelt.

Komponente (C) ist bevorzugt in 5 bis 25 Gewichtsprozent, besonders bevorzugt in 6 bis 23 Gewichtsprozent und insbesondere bevorzugt in 7 bis 21 Gewichtsprozent in der erfindungsgemässen Zusammensetzung (Anteil an der Gesamtmenge der Komponenten (A)-(D)) enthalten. Werden mehr als 25 Gewichtsprozent von Komponente (C) zugegeben, leiden die mechanischen Eigenschaften zu stark, unterhalb von 5 Gewichtsprozent hingegen werden keine sehr guten flammhemmenden Eigenschaften mehr erreicht.

Als Additiv oder Zusatzstoff (D) können Komponenten, ausgewählt aus der Gruppe bestehend aus Glaskugeln, Mineralpulvern, UV-Stabilisatoren, Wärmestabilisatoren, Gleit- und Entformungshilfsmitteln, Schlagzähmodifikatoren, Farb- und Markierungsstoffen, anorganischen Pigmenten, organischen Pigmenten, IR-Absorbern, Antistatika, Antiblockmitteln, Nukleierungsmitteln, Kristallisationsbeschleunigern, Kristallisationsverzögerern, kettenverlängernden Additiven, Flammschutzsynergisten, Leitfähigkeitsadditiven, optischen Aufhellern, photochromen Additiven, Vernetzungsmitteln, Intumeszenzmitteln, Fremdpolymeren und/oder Mischungen davon eingesetzt werden.

Additive und Zusatzstoffe (D) sind bevorzugt in 0.001 bis 18 Gewichtsprozent, besonders bevorzugt in 0.01 bis 10 Gewichtsprozent und insbesondere bevorzugt in 0.1 bis 5 Gewichtsprozent in der erfindungsgemässen Zusammensetzung enthalten.

In einer bevorzugten Ausführungsform ist die Zusammensetzung vollständig frei von Melamin, Melamincyanuraten und anderen Derivaten des Melamins.

Eine besonders bevorzugte Polyamidformmasse besteht aus
(A1) 5 bis 40 Gew.-% PA 6
(A2) 35 bis 55 Gew.-% PA 66
(B) 15 bis 40 Gew.-% an Glasfasern mit einer mittleren Länge von 135 bis 200 µm,
(C) 5 bis 25 Gew.-% mindestens eines Phosphinsäuresalzes und/oder eines Diphosphinsäuresalzes,
(D) 0.01 bis 5 Gew.-% mindestens eines Additivs,
wobei sich die Komponenten (A) bis (D) auf 100 Gew.-% ergänzen.

In einer bevorzugten Ausführungsform weisen die Polyamidformmassen eine wie im experimentellen Teil beschrieben bestimmte Glühdrahtentflammbarkeitszahl (GWFI) von mindestens 850°C, bevorzugt mindestens 900°C und insbesondere bevorzugt 960°C auf. In einer anderen bevorzugten Ausführungsform weisen die Polyamidformmassen eine wie im experimentellen Teil beschrieben bestimmte Reissdehnung von mehr als 3.5 %, bevorzugt mehr als 4.0 % und besonders bevorzugt mehr als 5.0 % auf.

In einer weiteren bevorzugten Ausführungsform werden die Polyamidformmassen gemäss der UL 94 bei einer Wanddicke des Prüfkörpers von 1.6 mm, bevorzugt von 3.2 als V-0 klassifiziert.

In einer anderen bevorzugten Ausführungsform weisen die Polyamidformmassen ein Verhältnis des linearen Spritzschwunds in Längsrichtung zum linearen Spritzschwund in Querrichtung von größer als 0.40 und besonders bevorzugt von größer als 0.50 auf.

Des weiteren betrifft die vorliegende Erfindung ein Verfahren zur Herstellung von derartigen Polyamid-Formmassen. Ein solches Verfahren kann durchgeführt werden, indem die Bestandteile (A)-(D), gegebenenfalls stufenweise, zusammengeführt und miteinander vermischt werden, beispielsweise in einem Extruder, wobei dann bereits als Ausgangsmaterial Glasfasern mit einer mittleren Länge im Bereich von 100-220 µm eingesetzt werden. Gemäß einer bevorzugten Ausführungsform ist aber das Verfahren dadurch gekennzeichnet, dass die Länge der Glasfasern in der resultierenden Polyamid-Formmasse durch eine entsprechende Führung des Mischprozesses eingestellt wird, d.h. beim Mischen die Glasfasern gebrochen und damit verkürzt werden. Mit anderen Worten ist ein solches bevorzugtes Verfahren dadurch gekennzeichnet, dass die Glasfaserlänge im beanspruchten Bereich von 100-220 µm bei der Compoundierung eingestellt wird, insbesondere beispielsweise durch in Kontakt Bringen der noch ungekürzten Glasfasern mit den Knetelementen des Extruders mittels Zugabe der Glasfasern über den Einzug des Extruders eingestellt wird. Im Gegensatz zur üblichen Glasfaserzugabe über den Seitentextruder zur Kunststoffschmelze mit schonender Behandlung der Glasfasern durch die nachfolgenden Knet-, Misch- und Förderelemente, die in einer mittleren Glasfaserlänge von über 220 µm resultiert, kann bei Zugabe der Glasfasern zusammen mit dem Kunststoffgranulat in den Einzug infolge der Behandlung der Glasfasern auf der vollen Verfahrenslänge des Extruders, durch geeignete Auswahl und Anordnung stark scherender Knet- und Stauelemente eine mittlere Glasfaserlänge von unter 200 µm auch bei Verwendung von längerem Ausgangsmaterial der Glasfasern erreicht werden. Innerhalb des aus dispersiven Knetelementen bestehenden und durch ein Rückstauelement abgeschlossenen Plastifizierbereiches, wo mechanischer Kontakt der Glasfasern mit dem im Einzugsbereich vor der Plastifizierung noch nicht aufgeschmolzenen Kunststoffgranulat besteht, ist eine effektive Verkürzung der Glasfasern gewährleistet.

Üblicherweise sind die Knetelemente in einem Bereich der Extruderschnecke angeordnet, die zwischen dem Einzugsbereich und der Seitenzuführung, also in dem Bereich des Extruders, in dem das Kunststoffgranulat aufgeschmolzen wird, liegt.

In einer weiteren Ausführungsform wird eine Extruderschnecke verwendet, die derart ausgestaltet ist, dass hinter dem Seiteneinzug Knetblöcke und Mischelemente eingearbeitet sind. In diesem Fall wird auch bei der Zugabe der Glasfasern über den Seiteneinzug eine mittlere Längenverteilung der Glasfasern von 100 bis 220 µm gewährleistet. Die Knetblöcke und Mischelemente sollten dann über einen weiteren Bereich der Schnecke ausgebildet sein, da eine weniger wirksame Verkürzung der Glasfasern erfolgt, als wenn die Knetelemente im Aufschmelzbereich angeordnet sind.

Bevorzugt werden Zweiwellenextruder, die gleich- oder gegendrehend sind, verwendet.

In einer besonders bevorzugten Ausführungsform wird die unverstärkte Polyamidformmasse (A), gegebenenfalls bereits versetzt mit den Komponenten (C) und/oder (D), in einem Extruder vorgelegt und die zugegebenen, noch ungekürzten, Glasfasern kommen in Kontakt mit mindestens einem Knet- und mindestens einem Rückstauelement der Extruderschnecke.

Die Erfindung betrifft auch die Verwendung von Glasfasern mit einer mittleren Länge von 100 bis 220 µm. Dabei kann entweder so vorgegangen werden, dass bereits Fasern einer solchen mittleren Länge als Ausgangsmaterial bei der Herstellung der Polyamid-Formmasse eingesetzt werden, oder es können längere Glasfasern eingesetzt werden, und diese dann im Herstellungsprozess (konkret in der Regel im Extruder) im Kontakt mit der Matrix auf diese mittlere Länge verkleinert werden. Entscheidend ist dabei, dass im resultierenden Formteil respektive in der resultierenden Polyamid-Formmasse eine mittlere Länge bestimmt nach der oben und im experimentellen Teil beschriebenen Methode vorliegt. Die Glasfasern werden dabei in Kombination mit mindestens einem Phosphinsäuresalz und/oder einem Diphosphinsäuresalz zur Herstellung von flammgeschützten Polyamidformmassen/Formteilen eingesetzt, bevorzugt werden diese gemäss IEC 60695-11-10 der (UL94) bei einer Wanddicke von 1.6 und 3.2 mm als V-0 klassifiziert.

Ausserdem betrifft die vorliegende Erfindung Formkörper, die unter Verwendung von derartigen Polyamid-Formmassen hergestellt werden.

Zudem betrifft die Erfindung Verwendungen von Formteilen, welche wenigstens teilweise aus derartigen Polyamid-Formmassen bestehen.

Im Bereich Elektro/Elektronik sind solche Verwendungen beispielsweise Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren.

Ausserdem finden die erfindungsmässen Formmassen auf Grund ihrer isotroperen Verarbeitungsschwindung und der damit verbundenen geringeren Verzugsneigung Verwendung für großflächige Bauteile wie zum Beispiel Gehäuserückwände von Schaltschränken und ähnlichem oder aufwendig gestaltete Bauteile mit anspruchsvoller Geometrie.

Weitere Ausführungsformen sind in den abhängigen Ansprüchen angegeben.

### BESCHREIBUNG BEVORZUGTER AUSFÜHRUNGSFORMEN

Die in Tabelle 1 aufgeführten Materialien wurden in den Beispielen und Vergleichsbeispielen eingesetzt.

**Tabelle 1: Eingesetzte Materialien.**

| Stoff | Handelsname | Lieferant | rel. Viskosität^{a)} | H₂O-Gehalt [Gew.-%] |
|---|---|---|---|---|
| PA 66 | Radipol A45 | Radici (IT) | 2,05 | 0,2 |
| PA 6 | Domamid 27 | Domo Caproleuna (DE) | 2,07 | 0,04 |
| Antioxidans | Irganox 1098 ED | BASF (DE) | - | - |
| Ca-Stearat | Ligastar CA 800 | Greven (DE) | - | - |
| Flammschutzmittel 1 | Exolit OP 1230 | Clariant (DE) | - | - |
| Flammschutzmittel 2 | Melapur MC 50 | BASF (DE) | - | - |
| Glasfasern | OCV 995 EC10-4.5 | OCV (FR) | - | - |

| | | | | |
|---|---|---|---|---|
| a) bestimmt nach ISO 307 (0,5 g Polyamid in 100 ml Ameisensäure bei 25 °C), Berechnung der relativen Viskosität (RV) nach RV = t/t₀ in Anlehnung an Abschnitt 11 der Norm. | | | | |

### Vorschrift zur Compoundierung:

Die Formmassen für die erfindungsgemässen Beispiele B1, B2 und B3 sowie für die Vergleichsbeispiele VB1, VB2 und VB3 wurden auf einem Zweiwellenextruder der Fa. Berstorff Typ ZE 40Ax33D UT hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert. Für die erfindungsgemässen Beispiele B1, B2, B3 und das Vergleichsbeispiel VB4 wurden die Glasfasern durch Dosierung in den Einzug des Extruders gemahlen, diese Glasfasern werden in Tabelle 2 als Glasfasern A bezeichnet. Bei den Vergleichsbeispielen VB1, VB2 und VB3 hingegen wurden die Glasfasern über den Seitenextruder des Extruders hinzugefügt, diese Glasfasern werden in Tabelle 2 als Glasfasern B bezeichnet. Aus dem erhaltenen Granulat wurden Probekörper gespritzt, an denen die in Tabelle 2 angegebenen Eigenschaften bestimmt wurden.

**Tabelle 2: Zusammensetzung und Eigenschaften der Beispiele:**

| **Zusammensetzung** | B1 | B2 | B3 | B4 | B5 | VB1 | VB2 | VB3 | VB4 |
|---|---|---|---|---|---|---|---|---|---|
| PA 66 | 50,0 | 43,64 | 39,64 | 57,96 | 38,04 | 50,0 | 43,64 | 39,64 | 43,64 |
| PA 6 | 12,5 | 10,91 | 9,91 | 14,49 | 9,51 | 12,5 | 10,91 | 9,91 | 10,91 |
| Antioxidans | 0,3 | 0,25 | 0,25 | 0,35 | 0,25 | 0,3 | 0,25 | 0,25 | 0,25 |
| Ca-Stearat | 0,2 | 0,2 | 0,2 | 0,2 | 0,2 | 0,2 | 0,2 | 0,2 | 0,2 |
| Flammschutzmittel 1 | 7,0 | 15,0 | 20,0 | 12,0 | 12,0 | 7,0 | 15,0 | 20,0 | - |
| Flammschutzmittel 2 | - | - | - | - | - | - | - | - | 15 |
| Glasfaser A | 30,0 | 30,0 | 30,0 | 15 | 40 | - | - | - | 30,0 |
| Längenverteilung [µm]^{a)} | 180 | 178 | 182 | 185 | 174 | - | - | - | 187 |
| Glasfaser B | - | - | - | - | - | 30,0 | 30,0 | 30,0 | - |
| Längenverteilung [µm]^{a)} | - | - | - | - | - | 357 | 360 | 354 | - |
| Eigenschaften | | | | | | | | | |
| Reissdehnung [%] | 8,2 | 6,0 | 5,0 | 8,5 | 5,1 | 3,5 | 3,3 | 3,4 | 3,0 |
| Schlagzähigkeit Charpy [kJ/m²] | 64 | 50 | 46 | 54 | 56 | 71 | 56 | 49 | 30 |
| Linearer Spritzschwund längs (S_{Mp}) [%] | - | 0,35 | - | 0,55 | - | - | 0,20 | - | 0,50 |
| Linearer Spritzschwund quer (S_{Mn}) [%] | - | 0,55 | - | 0,70 | - | - | 0,65 | - | 0,80 |
| Schwundverhältnis S_{Mp}/S_{Mn} | | 0,64 | | 0,79 | | | 0,31 | | 0,63 |
| UL 94 (1.6 mm), 48 h NK | V-1 | V-1 | V-1 | V-0 | V-1 | k. Kl. | k. Kl. | k. K1. | V-2 |
| UL 94 (1.6 mm), 7 Tage, 70°C | V-2 | V-1 | V-1 | V-0 | V-1 | k. Kl. | k. Kl. | k. Kl. | V-2 |
| UL 94 (1.6mm), Klassifizierung | V-2 | V-1 | V-1 | V-0 | V-1 | k. Kl. | k. Kl. | k. Kl. | V-2 |
| UL 94 (3.2 mm), 48 h NK | V-0 | V-0 | V-0 | V-0 | V-0 | k. Kl. | k. Kl. | k. Kl. | V-2 |
| UL 94 (3.2 mm), 7 Tage, 70°C | V-0 | V-0 | V-0 | V-0 | V-1 | k. Kl. | k. Kl. | k. Kl. | V-2 |
| UL 94 (3.2 mm), Klassifizierung | V-0 | V-0 | V-0 | V-0 | V-1 | k. Kl. | k. Kl. | k. Kl. | V-2 |
| GWFI (1.6 mm) [°C] | 960 | 900 | 900 | 960 | 900 | <750 | 750 | 800 | 850 |

| | | | | | | | | | |
|---|---|---|---|---|---|---|---|---|---|
| k. Kl.: keine Klassifizierung nach IEC 60695-11-10, NK: Normalklima, a) angegeben wird der Mittelwert (arithmetisches Mittel). | | | | | | | | | |

### Normen zur Bestimmung der mechanischen Daten

Die in Tabelle 2 angegebenen mechanischen Daten wurden nach den folgenden Normen bestimmt.

### Reissdehnung:

ISO 527 mit einer Zuggeschwindigkeit von 5 mm/min
ISO-Zugstab, Norm: ISO 3167, Typ A, 170 x 20/10 x 4 mm, Temperatur 23°C.

### Charpy-Schlagzähigkeit:

ISO 179-2/1eU (Charpy-Schlagzähigkeit)
ISO-Schlagstab, Norm: ISO 179-1, Typ 1, 80 x 10 x 4 mm, Temperatur 23°C.

### Norm zur Bestimmung der Verarbeitungsschwindung:

ISO 294-4, ISO-Platten Typ D2 nach ISO 294-3, 60 x 60 x 2 mm.

### Vorschrift zur Bestimmung der Glasfaserlängenverteilung

1.5 g der Probe wurden in 25 ml eines Gemisches aus Trifluorethanol und Chloroform (3 Volumenteile Trifluorethanol, 2 Volumenteile Chloroform) gegeben, für 14 Stunden bei 22°C stehen gelassen und anschliessend für 30 Minuten mit Ultraschall behandelt. Die löslichen Bestandteile wurden zusammen mit dem Solvens durch Filtration über eine G2-Glasfritte abgetrennt. Die in der Glasfritte verbliebenen Reste wurden trocken auf einen Objektträger überführt. Die Glasfaserlängenverteilung wurde gemäss Kapitel 6.2 bis 6.4 der ISO 22314:2006(E) bei 125-facher Vergrösserung bestimmt. Die Messung wurde an 3 Bildern mit je 200 Fasern durchgeführt.

### Vorschrift zur Bestimmung der flammhemmenden Eigenschaften

Die flammhemmenden Eigenschaften wurden im vertikalen Brandtest gemäss IEC 60695-11-10 (UL94) an Probekörpern mit den in Tabelle 2 angegebenen Wanddicken bestimmt. Die Probekörper wurden vor der Prüfung für 48 Stunden im Normalklima (23°C, 50 % relative Luftfeuchtigkeit) bzw. für 7 Tage bei 70 °C gelagert.

### Vorschrift zur Bestimmung des GWFI (glow wire flammability index)

Die Glühdrahtbeständigkeit wurde durch Prüfung mit dem Glühdraht zur Entflammbarkeit von Werkstoffen gemäss IEC 60695-2-12 an quadratischen Platten mit 100 mm Seitenlänge und den in Tabelle 2 angegebenen Wanddicken bestimmt. Die Probekörper wurden vor der Prüfung für 48 Stunden im Normalklima (23°C, 50 % relative Luftfeuchtigkeit) gelagert.

Der Vergleich der erfindungsgemässen Beispiele B1 bis B3 mit den Vergleichsbeispielen VB1 bis VB3 zeigt eindrücklich, dass durch die Verwendung der erfindungsgemässen Glasfasern mit einer mittleren Länge von 100 bis 220 µm, deutlich bessere flammhemmende Eigenschaften erhalten werden, als bei der Verwendung herkömmlicher Glasfasern. Während bei den Vergleichsbeispielen überhaupt keine Brandschutzklasse nach der IEC 60695-11-10 (UL94) erreicht wird, gelingt dies mit den erfindungsgemässen Glasfasern bereits bei Einsatz von nur 7 Gewichtsprozent des Flammschutzmittels.
Der Vergleich des erfindungsgemässen Beispiels B2 mit dem Vergleichsbeispiel VB4 zeigt, dass die Verwendung der erfindungsgemässen Glasfasern mit einem Flammschutzmittel auf Melamincyanurat-Basis zu eindeutig wesentlich schlechteren Werten führt als mit den erfindungsgemässen Flammschutzmitteln (C). Es gibt also eine Korrelation zwischen dem gewählten Flammschutzmittel und den gewählten Fasern.
Überraschenderweise liefert nur die von den Erfindern gefundene Kombination der Merkmale (B) Glasfasern mit einer mittleren Länge von 100 bis 220 µm und (C) ein Phosphinsäure- und/oder Diphosphinsäuresalz Polyamidformmassen mit ausgezeichneten flammhemmenden Eigenschaften.

## Patentansprüche

1. Polyamidformmasse mit folgender Zusammensetzung,
(A) 25 bis 90 Gew.-% mindestens eines Polyamids,
(B) 5 bis 60 Gew.-% an Glasfasern, wobei das arithmetische Mittel von deren Länge in der Polyamidformmasse 100 bis 220 µm beträgt,
(C) 5 bis 25 Gew.-% mindestens eines Phosphinsäuresalzes und/oder eines Diphosphinsäuresalzes
(D) 0 bis 20 Gew.-% mindestens eines Additivs,
wobei sich die Komponenten (A) bis (D) auf 100 Gew.-% ergänzen.

2. Polyamidformmasse nach Anspruch 1, **dadurch gekennzeichnet, dass** es sich bei Komponente (A) um wenigstens eines oder eine Mischung der Systeme ausgewählt aus der folgenden Gruppe handelt: PA 6; PA 46; PA 66; PA 66/6; PA 610; PA 612; PA 1010; PA 11; PA 12; PA MXD6; PA MXD10; PA MACM 12; PA PACM 12; PA 6T/6I; PA 6T/66; PA 6T/612; PA 6T/1012; PA 4T; PA 9T; PA 10T; PA 12T; PA 10/6T; PA 6T/6I/66; PA 11/10T; PA 12/10T; PA 610/10T; PA 612/10T; PA 1010/10T; PA 1012/10T; PA 1212/10T; PA 11/10T/12; PA 11/10T/6; PA 12/10T/6; PA 11/10T/10I; PA 11/10T/106; PA 12/10T/10I; PA 12/10T/106; Polyamide auf Basis einer Mischung aus Hexamethylendiamin und 2-Methyl Pentamethylendiamin als Diaminkomponente und Terephthalsäure als Disäurekomponente; Polyamide, deren Diaminbaustein 4,4'-Diaminocyclohexylmethan, 3,3'-Dimethyl-4,4'-diaminocyclohexylmethan, Cyclohexyldiamin, oder 2,2',6,6'-Tetramethyl-4,4'-methylenbis(cyclohexylamin) ist; wobei PA 6, PA 66 und Mischungen daraus bevorzugt sind.

3. Polyamidformmasse nach einem der vorhergehenden Ansprüche, **dadurch gekennzeichnet, dass** die Formmasse gemäss IEC 60695-11-10 (UL94) bei einer Wanddicke des Prüfkörpers von 1.6 mm und/oder 3.2 mm als V-0 klassifiziert wird.

4. Polyamidformmasse nach einem der vorhergehenden Ansprüche, **dadurch gekennzeichnet, dass** das mindestens eine Additiv ausgewählt ist aus der Gruppe bestehend aus: Glaskugeln, Mineralpulvern, UV-Stabilisatoren, Wärmestabilisatoren, Gleit- und Entformungshilfsmitteln, Schlagzähmodifikatoren, Farb- und Markierungsstoffen, anorganischen Pigmenten, organischen Pigmenten, IR-Absorbern, Antistatika, Antiblockmitteln, Nukleierungsmitteln, Kristallisationsbeschleunigern, Kristallisationsverzögerern, kettenverlängernden Additiven, Leitfähigkeitsadditiven, optischen Aufhellern, photochromen Additiven, Vernetzungsmitteln, Intumeszenzmitteln, Fremdpolymeren und/oder Mischungen daraus.

5. Polyamidformmasse nach einem der vorhergehenden Ansprüche, **dadurch gekennzeichnet, dass** die Reissdehnung, bestimmt nach ISO 527, mehr als 3.5 %, bevorzugt mehr als 4.0 % und besonders bevorzugt mehr als 5.0 % beträgt.

6. Polyamidformmasse nach einem der vorhergehenden Ansprüche, **dadurch gekennzeichnet, dass** der Anteil an Glasfasern (B) 5 bis 55 Gew.-%, bevorzugt 10 bis 50 Gew.-% und besonders bevorzugt 15 bis 40 Gew.-%, jeweils bezogen auf die Gesamtmasse bezogen auf die Gesamtmasse der Komponenten (A) bis (D) beträgt.

7. Polyamidformmasse nach einem der vorhergehenden Ansprüche, **dadurch gekennzeichnet, dass** der Anteil am mindestens einen Phosphinsäuresalz und/oder Diphosphinsäuresalz der Komponente (C) in der gesamten Polyamidformmasse 5 bis 22 Gew.-%, bevorzugt von 6 bis 23 Gew.-% und besonders bevorzugt von 7 bis 21 Gew.-% beträgt.

8. Polyamidformmasse nach einem der vorhergehenden Ansprüche, **dadurch gekennzeichnet, dass** der Anteil am mindestens einen Additiv von 0.001 bis 18 Gew.-%, bevorzugt von 0.01 bis 10 Gew.-% und besonders bevorzugt von 0.1 bis 5 Gew.-% beträgt.

9. Polyamidformmasse nach einem der vorhergehenden Ansprüche, **dadurch gekennzeichnet, dass** die Glasfasern einen runden Querschnitt aufweisen.

10. Polyamidformmasse nach einem der vorhergehenden Ansprüche, **dadurch gekennzeichnet, dass** die Formmassen einen GWFI, bestimmt nach IEC 60695-2-12, von mindestens 850°C, bevorzugt mindestens 900°C und insbesondere bevorzugt 960°C aufweisen.

11. Eine Polyamidformmasse nach einem der vorhergehenden Ansprüche, **dadurch gekennzeichnet, dass**
die Komponente (A) aufgebaut ist ausschließlich aus
(A1) 5 bis 40 Gew.-%, vorzugsweise 5 bis 15 Gew.-%, PA 6,
(A2) 35 bis 55 Gew.-% PA 66;
und/oder
dass die Komponente (B) in der Polyamidformmasse in einem Anteil im Bereich von 15 bis 40 Gew.-%, vorzugsweise im Bereich von 25 bis 35 Gew.-% vorliegt, wobei das arithmetische Mittel der Länge der Glasfasern (B), im Bereich von 135 bis 200 µm insbesondere vorzugsweise 150-200 µm liegt,
und/oder
dass die Komponente (C) in einem Anteil im Bereich von 5 bis 25 Gew.-% vorliegt,
und/oder
dass die Komponente (D) in der Polyamidformmasse einen Anteil im Bereich von 0.01 bis 5 Gew.-% vorliegt,
wobei sich die Komponenten (A) bis (D) auf 100 Gew.-% ergänzen.

12. Verfahren zur Herstellung einer Polyamidformmasse nach einem der Ansprüche 1 bis 11, **dadurch gekennzeichnet, dass** das Polyamid (A), gegebenenfalls bereits versetzt mit den Komponenten (C) und/oder (D), in einem Extruder vorgelegt wird und Glasfasern mit einer Länge, die größer ist als die Länge in der resultierenden Polyamidformmasse, und die im arithmetischen Mittel insbesondere größer ist als 220 µm oder sogar 250 µm, zugegeben werden, wobei dies vorzugsweise dadurch erreicht wird, dass die Glasfasern im Extruder in Kontakt mit mindestens einem Knet- und mindestens einem Rückstauelement der Extruderschnecke kommen.

13. Formkörper, welcher zumindest bereichsweise aus einer Polyamidformmasse nach einem der Ansprüche 1 bis 11 besteht, bevorzugt in Form eines Bauteils für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren, in Form von großflächigen Bauteilen, insbesondere von Gehäuseteilen für Schaltschränke und in Form aufwendig gestalteter Bauteile mit anspruchsvoller Geometrie.

14. Formkörper nach Anspruch 13, **dadurch gekennzeichnet, dass** seine Wandstärke mehr als 1 mm, bevorzugt mehr als 1.5 mm und besonders bevorzugt mehr als 3 mm beträgt, wobei insbesondere bevorzugt die Wandstärke 10 mm nicht übersteigt.

15. Verwendung von Glasfasern mit einem arithmetischen Mittel, der Länge von 100 bis 220 µm, in Kombination mit mindestens einem Phosphinsäuresalz und/oder einem Diphosphinsäuresalz zur Herstellung von flammgeschützten Polyamidformmassen und/oder Formteilen, oder Verwendung von Glasfasern mit einem arithmetischen Mittel der Länge von mehr als 220 µm, in Kombination mit mindestens einem Phosphinsäuresalz und/oder einem Diphosphinsäuresalz zur Herstellung von flammgeschützten Polyamidformmassen und/oder Formteilen, wobei der Herstellungsprozess für die Polyamidformmasse/das Formteil so eingestellt wird, dass in der resultierenden Polyamidformmasse/Formteil die Glasfasern ein arithmetisches Mittel der Länge im Bereich von 100-220 µm aufweisen, wobei die Polyamidformmasse/ das Formteil bevorzugtermassen gemäss IEC 60695-11-10 der (UL94) als V-0 klassifiziert sind.

## Claims

1. Polyamide moulding composition consisting of the following components:
(A) from 25 to 90% by weight of at least one polyamide,
(B) from 5 to 60% by weight of glass fibres, where the arithmetic average of the length of these glass fibres in the polyamide moulding composition is from 100 to 220 µm,
(C) from 5 to 25% by weight of at least one phosphinic salt and/or at least one diphosphinic salt,
(D) from 0 to 20% by weight of at least one additive,
where the entirety of components (A) to (D) gives 100% by weight.

2. Polyamide moulding composition according to Claim 1, **characterized in that** component (A) involves at least one, or a mixture, of the systems selected from the group consisting of: PA 6; PA 46; PA 66; PA 66/6; PA 610; PA 612; PA 1010; PA 11; PA 12; PA MXD6; PA MXD10; PA MACM 12; PA PACM 12; PA 6T/6I; PA 6T/66; PA 6T/612; PA 6T/1012; PA 4T; PA 9T; PA 10T; PA 12T; PA 10/6T; PA 6T/6I/66; PA 11/10T; PA 12/10T; PA 610/10T; PA 612/10T; PA 1010/10T; PA 1012/10T; PA 1212/10T; PA 11/10T/12; PA 11/10T/6; PA 12/10T/6; PA 11/10T/10I; PA 11/10T/106; PA 12/10T/10I; PA 12/10T/106; polyamides based on a mixture of hexamethylenediamine and 2-methylpentamethylenediamine as diamine component and terephthalic acid as diacid component; polyamides of which the diamine unit is 4,4'-diaminocyclohexylmethane, 3,3'-dimethyl-4,4'-diaminocyclohexylmethane, cyclohexyldiamine or 2,2',6,6'-tetramethyl-4,4'-methylenebis(cyclohexylamine);
where preference is given to PA 6, PA 66 and mixtures thereof.

3. Polyamide moulding composition according to any of the preceding claims, **characterized in that** the moulding composition is classified as V-0 in accordance with IEC 60695-11-10 (UL 94) for a test specimen wall thickness of 1.6 mm and/or 3.2 mm.

4. Polyamide moulding composition according to any of the preceding claims, **characterized in that** the at least one additive is selected from the group consisting of: glass beads, mineral powders, UV stabilizers, heat stabilizers, lubricants and mould-release aids, impact modifiers, dyes and markers, inorganic pigments, organic pigments, IR absorbers, antistatic agents, antiblocking agents, nucleating agents, crystallization accelerators, crystallization retarders, chain-extending additives, conductivity additives, optical brighteners, photochromic additives, crosslinking agents, intumescence agents, foreign polymers and/or mixtures thereof.

5. Polyamide moulding composition according to any of the preceding claims, **characterized in that** the tensile strain at break, determined in accordance with ISO 527, is more than 3.5%, preferably more than 4.0% and particularly preferably more than 5.0%.

6. Polyamide moulding composition according to any of the preceding claims, **characterized in that** the proportion of glass fibres (B) is from 5 to 55% by weight, preferably from 10 to 50% by weight and particularly preferably from 15 to 40% by weight, based in each case on the total composition based on the total composition of components (A) to (D).

7. Polyamide moulding composition according to any of the preceding claims, **characterized in that** the proportion of the at least one phosphinic salt and/or diphosphinic salt of component (C) in the entire polyamide moulding composition is from 5 to 22% by weight, preferably from 6 to 23% by weight and particularly preferably from 7 to 21% by weight.

8. Polyamide moulding composition according to any of the preceding claims, **characterized in that** the proportion of the at least one additive is from 0.001 to 18% by weight, preferably from 0.01 to 10% by weight and particularly preferably from 0.1 to 5% by weight.

9. Polyamide moulding composition according to any of the preceding claims, **characterized in that** the cross section of the glass fibres is circular.

10. Polyamide moulding composition according to any of the preceding claims, **characterized in that** the GWFI of the moulding compositions, determined in accordance with IEC 60695-2-12, is at least 850°C, preferably at least 900°C and with particular preference 960°C.

11. A polyamide moulding composition according to any of the preceding claims, **characterized in that** component (A) is composed exclusively of
(A1) from 5 to 40% by weight, preferably from 5 to 15% by weight, of PA 6,
(A2) from 35 to 55% by weight of PA 66 based in each case on the total composition of components (A) to (D);
and/or
that the proportion of component (B) present in the polyamide moulding composition is in the range from 15 to 40% by weight, preferably in the range from 25 to 35% by weight, wherein the arithmetic average length of the glass fibres (B) is in the range from 135 to 200 µm, with particular preference from 150 to 200 µm,
and/or
that the proportion of component (C) present is in the range from 5 to 25% by weight,
and/or
that the proportion of component (D) present in the polyamide moulding composition is in the range from 0.01 to 5% by weight,
where the entirety of components (A) to (D) gives 100% by weight.

12. Process for the production of a polyamide moulding composition according to any of Claims 1 to 11, **characterized in that** when the polyamide (A) is charged to an extruder it optionally already comprises admixtures of components (C) and/or (D), and in any case glass fibres of a length which is greater than the length in the resultant polyamide moulding composition, where the arithmetic average of the said length is in particular greater than 220 µm or even 250 µm, are added, this preferably being achieved **in that** within the extruder the glass fibres come into contact with at least one kneading and at least one retarding element of the extruder screw.

13. Moulding which is composed at least in regions of a polyamide moulding composition according to any of Claims 1 to 11, preferably in the form of a component for the electrical/electronics sector, in particular for parts of circuit boards, of housings, of foils, of lines, of switches, of distributors, of relays, of resistances, of capacitors, of coils, of lamps, of diodes, of LEDs, of transistors, of connectors, of controllers, of storage devices and of sensors, in the form of large-surface-area components, in particular of housing parts for switchgear cabinets and in the form of components of complicated design with sophisticated geometry.

14. Moulding according to Claim 13, **characterized in that** its wall thickness is more than 1 mm, preferably more than 1.5 mm, and particularly preferably more than 3 mm, where the wall thickness with particular preference does not exceed 10 mm.

15. Use of glass fibres with an arithmetic average length of from 100 to 220 µm in combination with at least one phosphinic salt and/or one diphosphinic salt for the production of flame-retardant polyamide moulding compositions and/or mouldings, or use of glass fibres with an arithmetic average length of more than 220 µm in combination with at least one phosphinic salt and/or one diphosphinic salt for the production of flame-retardant polyamide moulding compositions and/or mouldings, where the production process for the polyamide moulding composition/the moulding is adjusted in such a way that the arithmetic average length of the glass fibres in the resultant polyamide moulding composition/moulding is in the range from 100 to 220 µm, where the polyamide moulding composition/the moulding are preferably classified as V-0 in accordance with IEC 60695-11-10 (UL 94).

## Revendications

1. Matière à mouler polyamide ayant la composition suivante,
(A) 25 à 90 % en poids d'au moins un polyamide,
(B) 5 à 60 % en poids de fibres de verre, la moyenne arithmétique de leur longueur dans la matière à mouler polyamide valant de 100 à 220 µm,
(C) 5 à 25 % en poids d'au moins un sel d'acide phosphinique et/ou d'un sel d'acide diphosphinique,
(D) 0 à 20 % en poids d'au moins un additif,
les composants (A) à (D) se complétant à 100 % en poids.

2. Matière à mouler polyamide selon la revendication 1, **caractérisée en ce que** pour ce qui est du composant (A) il s'agit d'au moins un ou d'un mélange des systèmes choisis dans le groupe suivant : PA 6 ; PA 46 ; PA 66 ; PA 66/6 ; PA 610 ; PA 612 ; PA 1010 ; PA 11 ; PA 12 ; PA MXD6 ; PA MXD10 ; PA MACM 12 ; PA PACM 12 ; PA 6T/6I ; PA 6T/66 ; PA 6T/612 ; PA 6T/1012 ; PA 4T ; PA 9T ; PA 10T ; PA 12T ; PA 10/6T ; PA 6T/6I/66 ; PA 11/10T ; PA 12/10T ; PA 610/10T ; PA 612/10T ; PA 1010/10T ; PA 1012/10T ; PA 1212/10T ; PA 11/10T/12 ; PA 11/10T/6 ; PA 12/10T/6 ; PA 11/10T/10I ; PA 11/10T/106 ; PA 12/10T/10I ; PA 12/10T/106 ; polyamides à base d'un mélange d'hexaméthylènediamine et de 2-méthylpentaméthylènediamine en tant que composant diamine et d'acide téréphtalique en tant que composant diacide ; polyamides dont le composant diamine est le 4,4'-diaminocyclohexylméthane, le 3,3'-diméthyl-4,4'-diaminocyclohexylméthane, la cyclohexyldiamine, ou la 2,2',6,6'-tétraméthyl-4,4'-méthylènebis(cyclohexylamine) ; le PA 6, le PA 66 et des mélanges de ceux-ci étant préférés.

3. Matière à mouler polyamide selon l'une quelconque des revendications précédentes, **caractérisée en ce que** la matière à mouler est classée comme V-0 selon IEC 60695-11-10 (UL94) à une épaisseur de paroi de l'éprouvette de 1,6 mm et/ou 3,2 mm.

4. Matière à mouler polyamide selon l'une quelconque des revendications précédentes, **caractérisée en ce que** ledit au moins un additif est choisi dans le groupe constitué par des billes de verre, des poudres minérales, des stabilisants UV, des stabilisants thermiques, des adjuvants lubrifiants et de démoulage, des modificateurs antichoc, des colorants et substances de marquage, des pigments inorganiques, des pigments organiques, des absorbeurs IR, des agents antistatiques, des agents anti-adhérence de contact, des agents de nucléation, des accélérateurs de cristallisation, des retardateurs de cristallisation, des additifs prolongateurs de chaîne, des additifs modifiant la conductivité, des azurants optiques, des additifs photochromes, des agents de réticulation, des agents d'intumescence, des polymères étrangers et/ou des mélanges de ceux-ci.

5. Matière à mouler polyamide selon l'une quelconque des revendications précédentes, **caractérisée en ce que** l'allongement à la rupture, déterminée selon ISO 527, est de plus de 3,5 %, de préférence de plus de 4,0 % et de façon particulièrement préférée de plus de 5,0 %.

6. Matière à mouler polyamide selon l'une quelconque des revendications précédentes, **caractérisée en ce que** la proportion de fibres de verre (B) vaut de 5 à 55 % en poids, de préférence de 10 à 50 % en poids et de façon particulièrement préférée de 15 à 40 % en poids, chaque fois par rapport à la masse totale des composants (A) à (D).

7. Matière à mouler polyamide selon l'une quelconque des revendications précédentes, **caractérisée en ce que** la proportion d'au moins un sel d'acide phosphinique et/ou sel d'acide diphosphinique du composant (C) dans la matière à mouler polyamide totale vaut de 5 à 22 % en poids, de préférence de 6 à 23 % en poids et de façon particulièrement préférée de 7 à 21 % en poids.

8. Matière à mouler polyamide selon l'une quelconque des revendications précédentes, **caractérisée en ce que** la proportion d'au moins un additif vaut de 0,001 à 18 % en poids, de préférence de 0,01 à 10 % en poids et de façon particulièrement préférée de 0,1 à 5 % en poids

9. Matière à mouler polyamide selon l'une quelconque des revendications précédentes, **caractérisée en ce que** les fibres de verre présentent une section transversale ronde.

10. Matière à mouler polyamide selon l'une quelconque des revendications précédentes, **caractérisée en ce que** les matières à mouler présentent un indice GWFI, déterminé selon IC 60695-2-1, d'au moins 850°C, de préférence d'au moins 900 °C et de façon particulièrement préférée de 960 °C.

11. Matière à mouler polyamide selon l'une quelconque des revendications précédentes, **caractérisée en ce que**
le composant (A) est constitué exclusivement de
(A1) 5 à 40 % en poids, de préférence 5 à 15 % en poids, de PA 6,
(A2) 35 à 55 % en poids de PA 66 ;
et/ou
**en ce que** le composant (B) est présent dans la matière à mouler polyamide en une proportion dans la plage de 15 à 40 % en poids, de préférence dans la plage de 25 à 35 % en poids, la moyenne arithmétique de la longueur des fibres de verre (B) se situant dans la plage de 135 à 200 µm, de façon particulièrement préférée de 150-200 µm,
et/ou
**en ce que** le composant (C) est présent en une proportion dans la plage de 5 à 25 % en poids,
et/ou
**en ce que** le composant (D) est présent dans la matière à mouler polyamide en une proportion dans la plage de 0,01 à 5 % en poids,
les composants (A) à (D) se complétant à 100 % en poids.

12. Procédé pour la production d'une matière à mouler polyamide selon l'une quelconque des revendications 1 à 11, **caractérisé en ce qu'**on dispose au préalable dans une extrudeuse le polyamide (A), éventuellement déjà mélangé avec le composant (C) et/ou le composant (D), et on y ajoute des fibres de verre ayant une longueur qui est supérieure à la longueur dans la matière à mouler polyamide résultante et qui en moyenne arithmétique est en particulier supérieure à 220 µm ou même 250 µm, cela étant de préférence réalisé par le fait que les fibres de verre entrent en contact dans l'extrudeuse avec au moins un élément de malaxage et au moins un élément de retenue de la vis de l'extrudeuse.

13. Corps moulé, qui est constitué au moins par endroits d'une matière à mouler polyamide selon l'une quelconque des revendications 1 à 11, de préférence sous forme d'un élément de construction pour le secteur électrique/électronique, en particulier pour des parties de cartes à circuits imprimés, boîtiers, films, lignes, commutateurs, tableaux de distribution, relais, résistances, condensateurs, bobines, lampes, diodes, LED, transistors, connecteurs, régulateurs, accumulateurs et capteurs, sous forme de composants de grande surface, en particulier d'éléments de boîtiers pour armoires de distribution et sous forme d'éléments de construction minutieusement configurés à géométrie complexe.

14. Corps moulés selon la revendication 13, **caractérisé en ce que** son épaisseur de paroi est de plus de 1 mm, de préférence de plus de 1,5 mm et de façon particulièrement préférée de plus de 3 mm, en particulier l'épaisseur de paroi n'excédant de préférence pas 10 mm.

15. Utilisation de fibres de verre ayant une moyenne arithmétique de la longueur de 100 à 220 µm, en association avec au moins un sel d'acide phosphinique et/ou un sel d'acide diphosphinique, pour la production de matières à mouler polyamide et/ou de pièces moulées, ignifugées, ou utilisation de fibres de verre ayant une moyenne arithmétique de la longueur de plus de 220 µm, en association avec au moins un sel d'acide phosphinique et/ou un sel d'acide diphosphinique, pour la production de matières à mouler polyamide et/ou de pièces moulées, ignifugées, le processus de production de la matière à mouler polyamide/de la pièce moulée étant ajusté de manière que dans la matière à mouler polyamide/pièce moulée résultante les fibres de verre présentent une moyenne arithmétique de la longueur dans la plage de 100-220 µm, la matière à mouler polyamide/la pièce moulée étant classées de préférence en tant que V-0 selon IEC 60695-11-10 norme (UL94).
